# EUROPÄISCHE PATENTANMELDUNG

(11) **EP 2 675 046 A2**
(43) Veröffentlichungstag der Anmeldung: **18.12.2013**
(21) Anmeldenummer: 13171299.4
(22) Anmeldetag: 10.06.2013
(51) Int. Cl.: H02K 7/06

(54) **Verstellvorrichtung**

(30) Priorität: 12.06.2012 DE 102012105079
(71) Anmelder: Kokinetics GmbH, 65830 Kriftel (DE)
(72) Erfinder: Dietz, Horst, 67727 Lohnsfeld (DE)
(74) Vertreter: Weiss, Peter

(57) **Zusammenfassung**

Eine Verstellvorrichtung für ein Bauteil (35, 28) mit einem Motor (2), einem Stator, einem Rotor (4) und einem Drehgleitelement (40, 27) soll durch einen uniaxialen Aufbau gekennzeichnet sein.

## Beschreibung

Die vorliegende Erfindung bezieht sich auf eine Verstellvorrichtung für ein Bauteil gemäss dem Oberbegriff von Anspruch 1.

### Stand der Technik

Derartige Vorrichtungen sind bereits in vielfältiger Form und Ausführung auf dem Markt bekannt und gebräuchlich.

Nachteilig bei den aus dem Stand der Technik bekannten Vorrichtungen ist vor allem die Anordnung eines separaten Gestänges zur Verstellung, was sowohl die Herstellungskosten erhöht als auch die Handhabung der Vorrichtung, die Wartung und die Funktionalität der Vorrichtung erschwert.

### Aufgabe der Erfindung

Aufgabe der vorliegenden Erfindung ist es, eine Verstellvorrichtung der oben genannten Art zu schaffen, welche die Nachteile aus dem Stand der Technik beseitigt und einen einfachen, leicht zu bedienenden Aufbau aufweist, kostengünstig in der Herstellung und platzsparend anzuordnen ist. Insbesondere soll auf ein umständliches Gestänge zur Verstellung von Solarmodulen, Solartrackern od. dgl. verzichtet werden können.

### Lösung der Aufgabe

Zur Lösung der Aufgabe führen die Merkmale des Anspruchs 1.

Die Verstellvorrichtung weist einen Motor als Antrieb, einen Stator sowie einen Rotor in einer ganz oder nur teilweise gekapselten und vor allem uniaxialen Bauweise auf. Dies hat zur Folge, dass noch weniger Bauraum benötigt wird, um die positiven Vorteile der Erfindung zu nutzen. Der uniaxiale Aufbau dieser Verstellvorrichtung erlaubt ferner einen hermetisch dicht gekapselten und sehr kompakten Aufbau von Getriebe und Schwenkantrieb, die bei Bedarf in andere Baukomponenten integriert werden können.

Generell ist als Antrieb einer solchen Verstellvorrichtung der Antrieb zu verstehen, welcher benötigt wird, um über die Verstellvorrichtung ein Bauteil zu verstellen bzw zu verschwenken. Als Bauteile kommen beispielsweise Solartracker, Solarmodul, Solarspiegel oder Solarpaneel zur Verfolgung des Sonnenstandes in Betracht. Denkbar sind aber auch Bauteile, wie Türscharniere, Fahrzeugsitzverstellscharniere oder Krankenbetten. Im Grunde soll diese Verstellvorrichtung immer dann in Betracht kommen, wenn eine biaxiale Positionierung eines Bauteils benötigt wird.

Die Energie zum Antreiben der Verstellvorrichtung und damit zur Verstellung des Solarmoduls oder dergleichen wird von dem Antrieb zur Verfügung gestellt. Der Antrieb ist bevorzugt ein Elektromotor. Denkbar sind aber auch andere Antriebe, welche ausreichend Energie erzeugen können, die Verstellvorrichtung antreiben zu können.

Die Verstellvorrichtung dient der Übertragung der Energie des Antriebs auf den Rotor, relativ zu dem Stator.

In einem bevorzugten Ausführungsbeispiel ist die Verstellvorrichtung mit Stator und Rotor uniaxial aufgebaut. Eine uniaxiale Anordnung bedeutet in diesem Zusammenhang, dass die Verstellvorrichtung, der Stator, der Rotor und der Antrieb auf derselben Ebene anschliessend aneinander aufgebaut sind. Folglich bilden sie einen einachsigen Aufbau. Uniaxial bezeichnet eine Orientierung der Verstellvorrichtung, des Stators, des Rotors und des Antriebs an einer ungebrochenen Linie und dies ist beispielsweise in Achsrichtung, längsachsig oder achsrecht bezeichnenbar. Vorliegend erfolgt die Ausrichtung entlang der Antriebsachse bzw. der Schwenkachse.

Die Verstellvorrichtung kann mit einem Drehgleitelement mit zumindest zwei Drehgleitgewinden versehen sein, die über ein Aussengewinde mit einem Innengewinde in einer Hülse des Stators und des Rotors in Wirkverbindung stehen. Über eine Spindelstange, welche mit dem Motor verbunden ist, werden die Drehgleitgewinde angetrieben und bewegt, wodurch sich über die Wirkverbindung auch der Stator und der Rotor drehen und so ein Verschwenken des Ruderblattes bzw. des Aussenbordmotors erfolgen kann.

In einem weiteren Ausführungsbeispiel ist ein Drehgleitelement vorgesehen, welches über ein Innengewinde mit der Spindelstange selbst in Wirkverbindung steht. Das Drehgleitelement ist mit zumindest zwei Drehgleitführungsnuten versehen, in denen Drehgleitführungselemente geführt sind, die wiederum an einer dem Drehgleitelement zugewandten Innenseite der Hülsen des Stators und des Rotors angeordnet sind. Die Hülsen von Stator und Rotor sind ansonsten innen glatt und ohne Nuten.

Die Drehgleitführungsnuten sind in Form einer Langnut in eine der Innenseite der Hülsen zugewandten Oberfläche des Drehgleitelements eingelassen, sind jedoch nicht bis zu dem Gewinde des Drehgleitelementes durchgebrochen. Durch die Wirkverbindung zwischen Innengewinde des Drehgleitelementes und Aussengewinde der Spindelstange kann das Drehgleitelement auf der Spindelstange axial entlang der Antriebs- bzw. Schwenkachse verschoben werden.

Die Steigung der wendelförmig bzw. schraubenförmig verlaufenden Drehgleitführungsnuten kann unterschiedlich sein. Wird das Drehgleitelement axial entlang der Antriebs- bzw. Schwenkachse bzw. der Spindelstange verschoben, so bedeutet dies eine unterschiedliche Drehung des Stators und des Rotors um die Antriebs- bzw. Schwenkachse. Folglich verdreht sich der Rotor relativ zum Stator um den Differenzwinkel der Drehgleitführungsnuten zueinander bzw. voneinander weg. Wenn die beiden Drehgleitführungsnuten gleichsinnig sind, aber unterschiedlich steigend verlaufen, ist es die Differenz der Winkel. Bei gegensinniger Drehrichtung der Drehgleitführungsnuten ist es die Summe der Winkel.

Im Grunde können die Drehgleitführungsnuten jede beliebige Form haben und auch durchgehend unregelmässig kurvig sein. Der Relativwinkel resultiert immer aus dem Differenzwinkel. Die Position des Drehgleitelementes wird durch die Spindelstange eingestellt bzw. durch den Motor, der die Spindelstange um die Antriebs- bzw. Schwenkachse dreht und dabei das Drehgleitelement entlang dieser Antriebs- bzw. Schwenkachse verschiebt.

Es können auch Rohr oder Rohrelemente vorgesehen sein, die den Stator und/oder den Rotor zumindest teilweise umschliessen und abdichten und innerhalb derer sich der Stator und der Rotor verschieben lassen. Im Falle der Vorsehung eines Rohres oder einer Hülse verläuft dieses bevorzugt allerdings abdeckend und dichtend über den Dichtungsbereich zwischen dem Stator und dem Rotor, so dass auf eine zusätzliche Dichtung verzichtet werden kann. Optional können jedoch weitere Dichtungselemente zusätzlich vorgesehen sein.

Die Verstellvorrichtung schwenkt mit Antrieb des Motors das am Rotor befestigte Solarmodul um einen gewissen Winkelbereich, typischerweise maximal um plus minus 180 Grad. Die Verstellvorrichtung wandelt dabei schnelle Motordrehungen um die Antriebsachse in langsame Bewegungen einer Schwenkachse um, wobei bauartbedingt die Antriebsachse und die Schwenkachse zumindest fast, vorliegend jedoch ganz zusammenfallen und meist identisch sind.

Über zwei Befestigungselemente kann die Verstellvorrichtung an einem Sockel oder an einem Unterbau befestigt werden.

In einem anderen Ausführungsbeispiel können auch zumindest zwei Verstellvorrichtungen innerhalb einer Hülse angeordnet sein. Diese Verstellvorrichtungen können dabei spiegelbildlich angeordnet sein. Es ist auch denkbar, dass die Verstellvorrichtungen beispielsweise in einem Sockel eines Solartrackers und zusätzlich im Tisch des Solartrackers bzw. unterhalb des Solarmoduls des Solartrackers angeordnet sind. Somit ist nicht nur eine horizontale Verschwenkung, sondern auch eine vertikale Verschwenkung des Solarmoduls denkbar. Damit ist eine umfangreiche Bandbreite von Verstellmöglichkeiten für den Solartracker bzw. das Solarmodul gegeben, um den Sonnenstand in gleich welcher Jahreszeit verfolgen zu können.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische Unteransicht einer erfindungsgemässen Verstellvorrichtung;
Figur 2 eine vergrössert dargestellte Schnittansicht eines weiteren Ausführungsbeispiels einer erfindungsgemässen Verstellvorrichtung mit einem Drehgleitelement;
Figur 3 eine Schnittdarstellung eines weiteren Ausführungsbeispiels der erfindungsgemässen Verstellvorrichtung mit zwei Drehgleitelementen;
Figur 4 eine geschnittene Seitenansicht der Verstellvorrichtung in Figur 3 in Gebrauchslage an einem Solartracker;
Figur 5 eine geschnittene Seitenansicht der Verstellvorrichtung in Figur 3 in einer weiteren Gebrauchslage an einem Solartracker;
Figur 6 eine Rückansicht der Verstellvorrichtung in Figur 5;
Figur 7 eine geschnittene Ansicht einer alternativen Anordnungsmöglichkeit von Verstellvorrichtungen; und
Figur 8 eine geschnittene Ansicht einer alternativen Anordnungsmöglichkeit von Verstellvorrichtungen.

### Ausführungsbeispiele

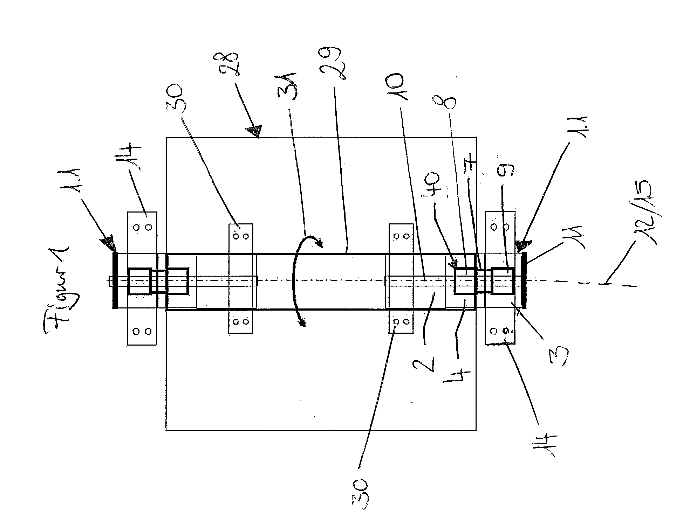

Gemäss Figur 1 ist eine Verstellvorrichtung 1.1 für ein Solarmodul 28 gezeigt. Diese Verstellvorrichtung 1.1 weist einen Motor 2, einen Stator 3 sowie einen Rotor 4 in einer nur teilweise gekapselten Bauweise auf. So ist der Rotor 4 zumindest teilweise in einer Hülse 29 angeordnet. Ein Drehgleitelement 40 mit zwei gegenläufigen Drehgleitgewinden 8 und 9, die über einen festen Verbinder 7 miteinander verbunden sind, verbindet den Stator 3 mit dem Rotor 4.

Eine Spindelstange 10 ist einends auf nicht näher gezeigte Art in dem Motor 2 gelagert und wird von diesem angetrieben. Andernends ist die Spindelstange 10 in einer Spindelmutter 11 gelagert. Die Spindelstange 10 steht in Wirkverbindung mit den beiden Drehgleitgewinden 8 und 9 und somit mit dem Stator 3, dem Rotor 4 und damit der Hülse 29. Die Spindelstange 10 dreht um eine Längs- bzw. Antriebsachse 12.

Über Befestigungselemente 14 kann die Verstellvorrichtung 1.1 an einem nicht näher gezeigten Gestell befestigt werden. Über weitere Befestigungselemente 30 wird die Hülse 29 mit dem Solarmodul 28 verbunden, so dass bei einer Drehung der Hülse 29, wie sie ein Pfeil 31 andeutet, das Solarmodul 28 mitschwenkt.

Die Verstellvorrichtung 1.1 schwenkt mit Antrieb des Motors 2 das am Rotor 4 befestigte Bauteil, in diesem Fall ein Solarmodul 28 um einen gewissen Winkelbereich, typischerweise maximal um plus minus 90 Grad. Die Verstellvorrichtung 1.1 wandelt dabei schnelle Motordrehungen um die Antriebsachse 12 in langsame Bewegungen einer Schwenkachse 15 um, wobei bauartbedingt die Antriebsachse 12 und die Schwenkachse 15 zumindest fast, vorliegend jedoch ganz zusammenfallen und meist identisch sind.

Der uniaxiale Aufbau dieser Verstellvorrichtung 1.1 erlaubt einen hermetisch dicht gekapselten und sehr kompakten Aufbau von Getriebe und Schwenkantrieb, die bei Bedarf in andere Baukomponenten integriert werden können.

Die Drehgleitgewinde 8 und 9 sind bei einer Drehung der Spindelstange 10 entlang der Antriebs- bzw. Schwenkachse 12 bzw. 15 relativ zu dem Stator 3 und dem Rotor 4 verschiebbar. Helikale gegenläufige Gleitführungen verwandeln die Relativverschiebung der Drehgleitgewinde 8 und 9 sowie des Stators 3 und des Rotors 4 in eine Drehung zwischen Stator 3 und Rotor 4. So entsteht eine langsame, kraftvolle Drehung des Rotors 4 um die Antriebs- bzw. Schwenkachse 12 bzw. 15.

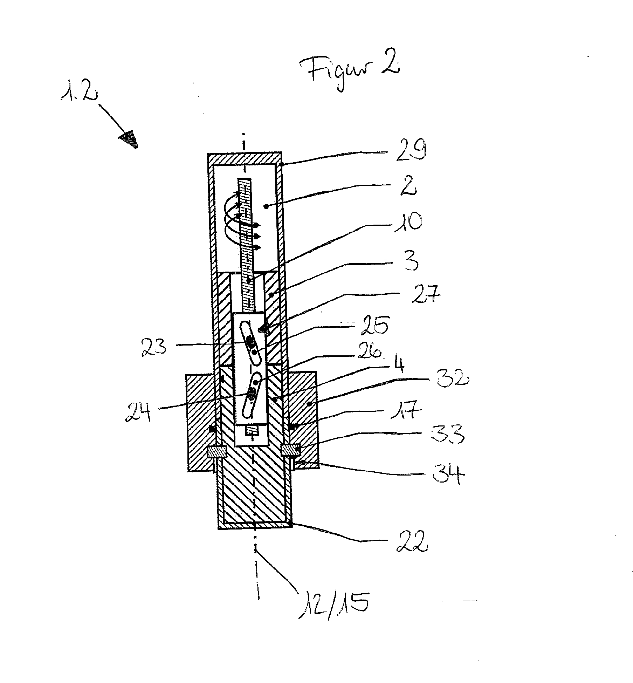

In Figur 2 ist ein weiteres Ausführungsbeispiel einer Verstellvorrichtung 1.2 gezeigt. Das Ausführungsbeispiel unterscheidet sich von dem Ausführungsbeispiel gemäss Figur 1 dadurch, dass es sich um eine vollständig gekapselte Bauweise handelt, d.h. sämtliche Bauteile sind entweder in der Hülse 29 oder einem weiteren Rohrelement 22 eingebaut. Die Hülse 29 verläuft abdeckend und dichtend über den Dichtungsbereich zwischen dem Stator 3 und dem Rotor 4, so dass auf eine zusätzliche Dichtung verzichtet werden kann. Optional kann jedoch ein Dichtungselement 17 zusätzlich vorgesehen sein.

Anstelle der beiden Drehgleitgewinde 8 und 9 sind Drehgleitführungselemente 23 und 24 vorgesehen, wobei das Drehgleitführungselement 23 innen an der Hülse des Stators 3 angeordnet ist und das Drehgleitführungselement 24 innen an der Hülse des Rotors 4. Die Hülsen von Stator 3 und Rotor 4 sind ansonsten innen glatt und ohne Nuten.

Innerhalb der Hülsen des Stators 3 bzw. des Rotors 4 ist weiterhin ein Drehgleitelement 27 mit Drehgleitführungsnuten 25 und 26 vorgesehen. Die Drehgleitführungselemente 23 und 24 sind in den Drehgleitführungsnuten 25 bzw. 26 geführt, welche in Form einer Langnut in eine Oberfläche des Drehgleitelements 27 eingelassen sind, jedoch nicht bis zu einem nicht näher gezeigten Gewinde des Drehgleitelementes 27 durchgebrochen sind. Das Gewinde des Drehgleitelementes 27 steht in Wirkverbindung mit einem Gewinde der Spindelstange 10, wodurch das Drehgleitelement 27 auf der Spindelstange 10 entlang der Antriebs- bzw. Schwenkachse 12 bzw. 15 verschiebbar ist.

Die Steigung der wendelförmig bzw. schraubenförmig verlaufenden Drehgleitführungsnuten 25 und 26 kann unterschiedlich sein.

Wird das Drehgleitelemente 27 axial entlang der Antriebs- bzw. Längsachse 12 bzw. der Spindelstange 10 verschoben, so bedeutet dies eine unterschiedliche Drehung des Stators 3 und des Rotors 4 um die Antriebs- bzw. Schwenkachse 12 bzw. 15. Folglich verdreht sich der Rotor 4 relativ zum Stator 3 um den Differenzwinkel der Drehgleitführungsnuten 25 und 26 zueinander bzw. voneinander weg. Wenn die beiden Drehgleitführungsnuten 25 und 26 gleichsinnig sind, aber unterschiedlich steigend verlaufen, ist es die Differenz der Winkel. Bei gegensinniger Drehrichtung der Drehgleitführungsnuten 25 und 26 ist es die Summe der Winkel.

Im Grunde können die Drehgleitführungsnuten 25 und 26 jede beliebige Form haben und auch durchgehend unregelmässig kurvig sein. Der Relativwinkel resultiert immer aus dem Differenzwinkel. Die Position des Drehgleitelementes 27 wird durch die Spindelstange 10 eingestellt bzw. durch den Motor 2, der die Spindelstange 10 um die Antriebs- bzw. Schwenkachse 12 bzw. 15 dreht und dabei das Drehgleitelement 27 entlang dieser Antriebs- bzw. Schwenkachse 12 bzw. 15 verschiebt.

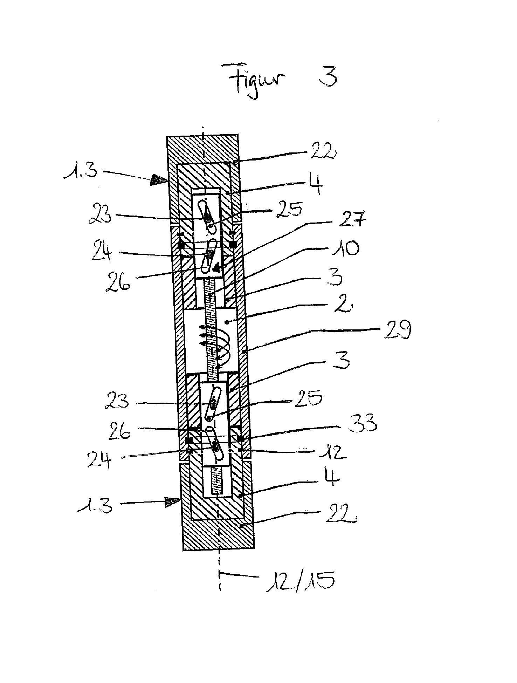

Weiterhin umfasst die Verstellvorrichtung 1.2 die Hülse 29, das Rohrelement 22 und einen Lagerbock 32, zu dem ein Klemmelement 33 mit dem Rotor 4 relativ zum Stator 3 axial fixiert wird. Für das Klemmelement 33 ist eine Ringklemme 34 vorgesehen. Diese Ringklemme 34 hält den Rotor 4 relativ zu dem Stator 3. In Figur 3 sind zwei spiegelbildlich angeordnete Verstellvorrichtungen 1.3 gezeigt. Die Verstellvorrichtungen 1.3 weisen die gleichen Bestandteile auf, wie die Verstellvorrichtung 1.2 in Figur 2, weshalb auf diese verwiesen wird.

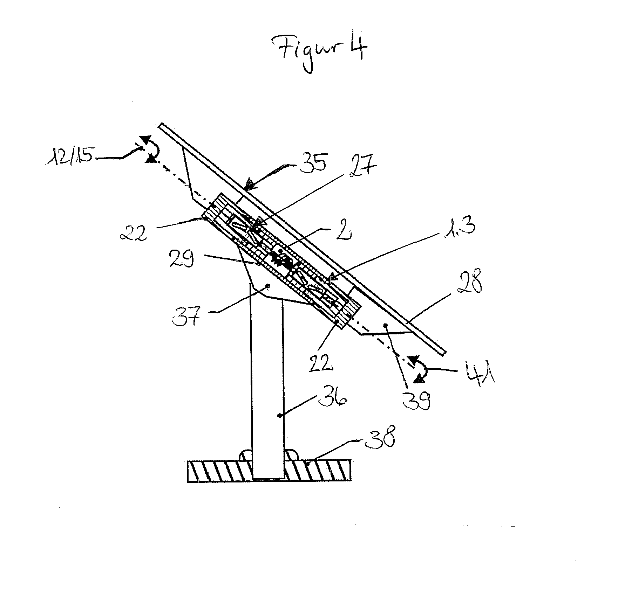

Figur 4 zeigt die Verstellvorrichtung 1.3 in Gebrauchslage an einem Solartracker 35, welcher das Solarmodul 28 und einen Sockel 36 umfasst, welche über ein Drehgelenk 37 miteinander verbunden sind. Der Sockel 36 ist auf nicht näher gezeigte Art und Weise mit einem Boden 38 verbunden. Dabei befindet sich die Verstellvorrichtung 1.3 auf einer Unterseite 39 des Solartrackers 35. Ein Verschwenken des Solarmoduls 28 mit Hilfe der Verstellvorrichtung 1.3 erfolgt um die Antriebs- bzw. Schwenkachse 12 bzw. 15 in Richtung eines Pfeils 41.

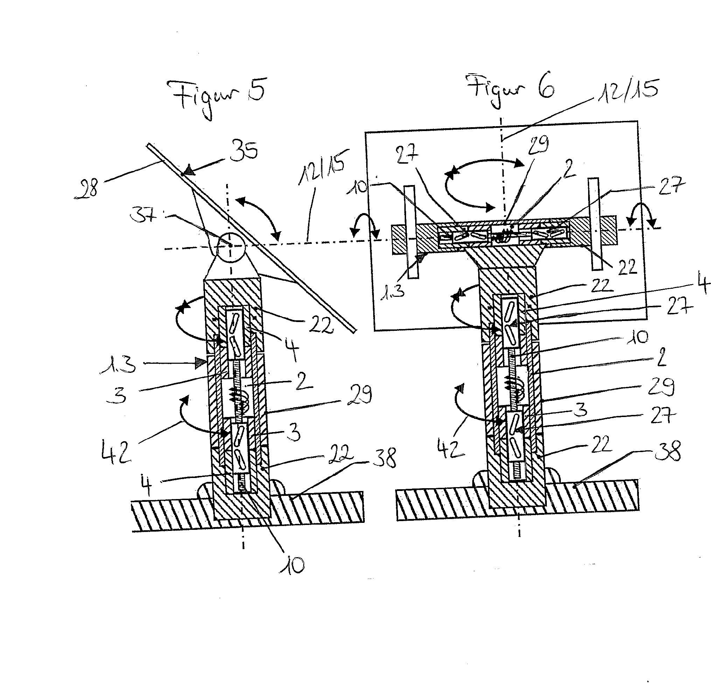

In Figur 5 ist eine Verstellvorrichtung 1.3 gezeigt, welche nun anders als in Figur 4 im Sockel 36 angeordnet ist. Dies führt dazu, dass der Sockel 36 wie mit einem Pfeil 42 angedeutet, schwenkbar ist. Im Rahmen der Ausführungen zu Figur 5 wird explizit auf die Figur 4 Bezug genommen. Es wird auf die Wiederholung aller in Figur 4 ausgeführten Merkmale zu Figur 5 verzichtet. Dies gilt insbesondere dann, wenn die gleichen Bezugsziffern für die gleichen Merkmale verwendet wurden.

In Figur 6 ist eine andere Ansicht der Figur 5 gezeigt. Danach ist in dem Drehgelenk 37 ebenfalls die Verstellvorrichtung 1.3 angeordnet. Diese Erweiterung hat den Vorteil, dass das Solarmodul 28 um die Horizontalachse geschwenkt und damit dem jahreszeitlichen Sonnenstand angepasst werden kann. Für die Überwindung des grossen Drehbereichs im Sockel 38 ist die zweistufige Verstellvorrichtung 1.3 eingebaut. Die zweistufige Verstellvorrichtung 1.3 ist so ausgeführt, dass beide Drehwinkel sich addieren. Die Spindelstange 10 bewegt beide Drehgleitelemente 27 durch die Verankerung. Durch die Verankerung eines Rotorendes dreht sich der Stator 3 und mit ihm der darüberliegende Bereich.

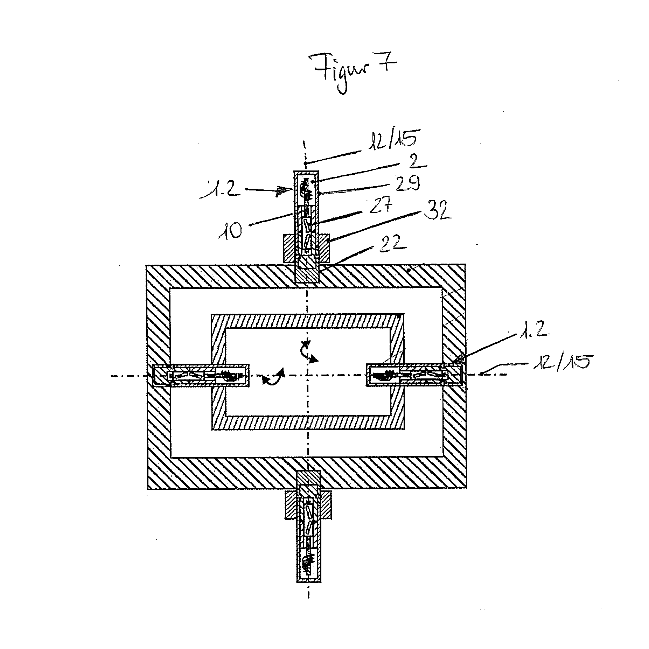

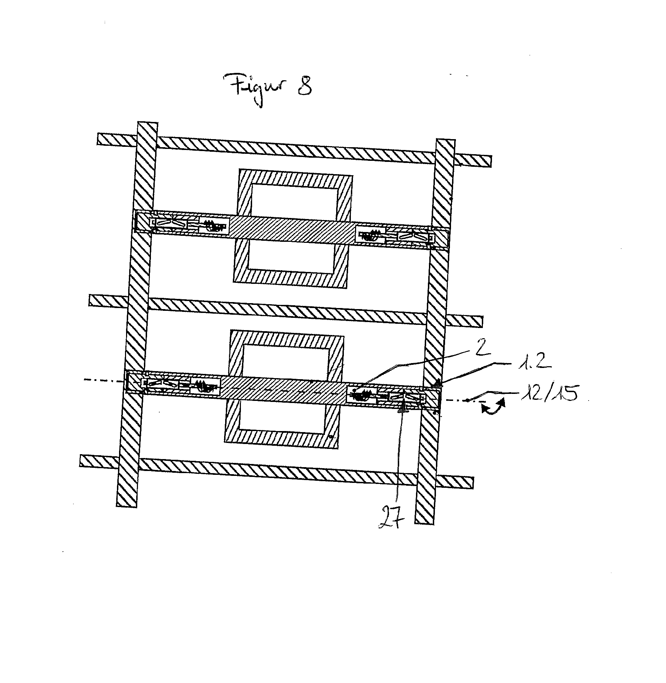

In den Figuren 7 und 8 werden Anordnungsmöglichkeiten von Verstellvorrichtungen 1.2 gezeigt.

**Bezugszeichenliste**

| | | | | | |
|---|---|---|---|---|---|
| 1 | Verstellvorrichtung | 34 | Ringklemme | 67 | |
| 2 | Motor | 35 | Solartracker | 68 | |
| 3 | Stator | 36 | Sockel | 69 | |
| 4 | Rotor | 37 | Drehgelenk | 70 | |
| 5 | | 38 | Boden | 71 | |
| 6 | | 39 | Unterseite | 72 | |
| 7 | | 40 | Dregleitelement | 73 | |
| 8 | Drehgleitelement | 41 | Pfeil | 74 | |
| 9 | Drehgleitelement | 42 | Pfeil | 75 | |
| 10 | Spindelstange | 43 | | 76 | |
| 11 | Spindelmutter | 44 | | 77 | |
| 12 | Antriebsachse | 45 | | 78 | |
| 13 | | 46 | | 79 | |
| 14 | Befestigungselement | 47 | | | |
| 15 | Schwenkachse | 48 | | | |
| 16 | | 49 | | | |
| 17 | Dichtungselement | 50 | | | |
| 18 | | 51 | | | |
| 19 | | 52 | | | |
| 20 | | 53 | | | |
| 21 | | 54 | | | |
| 22 | Rohrelement | 55 | | | |
| 23 | Drehgleitführungselem. | 56 | | | |
| 24 | Drehgleitführungselem. | 57 | | | |
| 25 | Drehgleitführungsnut | 58 | | | |
| 26 | Drehgleitführungsnut | 59 | | | |
| 27 | Drehgleitelement | 60 | | | |
| 28 | Solarmodul | 61 | | | |
| 29 | Hülse | 62 | | | |
| 30 | Befestigungselement | 63 | | | |
| 31 | Pfeil | 64 | | | |
| 32 | Lagerbock | 65 | | | |
| 33 | Klemmelement | 66 | | | |

## Patentansprüche

1. Verstellvorrichtung für ein Bauteil (35, 28) mit
- einem Motor (2),
- einem Stator (3),
- einem Rotor (4) und
- einem Drehgleitelement (40, 27);
**gekennzeichnet durch**
einen uniaxialen Aufbau.

2. Verstellvorrichtung nach Anspruch 1, **dadurch gekennzeichnet, dass** der Stator (3) und/oder der Rotor (4) zumindest teilweise gekapselt ausgebildet sind.

3. Verstellvorrichtung nach Anspruch 1 oder 2, **dadurch gekennzeichnet, dass** eine Antriebsachse (12) gleichzeitig eine Schwenkachse (15) ist.

4. Verstellvorrichtung nach einem der Ansprüche 1 bis 3, **dadurch gekennzeichnet, dass** eine Spindelstange (10) zum Antreiben des Drehgleitelements (40, 27) vorgesehen ist.

5. Verstellvorrichtung nach wenigstens einem der Ansprüche 1 bis 4, **dadurch gekennzeichnet, dass** zumindest der Stator (3) zumindest teilweise von einer Hülse (29) umschlossen ist.

6. Verstellvorrichtung nach Anspruch 5, **dadurch gekennzeichnet, dass** die Hülse (29) zumindest teilweise den Rotor (3) umschliessen kann.

7. Verstellvorrichtung nach wenigstens einem der Ansprüche 1 bis 6, **dadurch gekennzeichnet, dass** der Rotor (4) zumindest teilweise von einem Rohrelement (22) umschlossen ist.

8. Verstellvorrichtung nach wenigstens einem der Ansprüche 1 bis 8, **dadurch gekennzeichnet, dass** das Drehgleitelement (40) zumindest zwei Drehgleitgewinde (8, 9) aufweist.

9. Verstellvorrichtung nach wenigstens einem der Ansprüche 1 bis 8, **dadurch gekennzeichnet, dass** das Drehgleitelement (27) zumindest zwei Drehgleitführungsnuten (25, 26) und zumindest zwei Drehgleitführungselemente (23, 24) umfasst.

10. Verstellvorrichtung nach wenigstens einem der Ansprüche 1 bis 8, **dadurch gekennzeichnet, dass** das zumindest ein weiteres Drehgleitelement (27) vorgesehen ist
